Europäisches Patentamt

European Patent Office

Office européen des brevets

(11) Numéro de publication : **0 672 917 A1**

# (12) DEMANDE DE BREVET EUROPEEN

(21) Numéro de dépôt : **95400545.0**

(22) Date de dépôt : **14.03.95**

(51) Int. Cl.$^6$ : **G01S 5/10**, G01S 5/06, G01S 5/00

(30) Priorité : **18.03.94 FR 9403184**

(43) Date de publication de la demande :
**20.09.95 Bulletin 95/38**

(84) Etats contractants désignés :
**DE FR GB**

(71) Demandeur : **THOMSON-CSF**
**173, Boulevard Haussmann**
**F-75008 Paris (FR)**

(72) Inventeur : **Malter, Rémi**
**THOMSON-CSF,**
**SCPI,**
**B.P. 329**
**F-92402 Courbevoie Cedex (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

(54) **Système permettant la localisation d'un récepteur ou d'un émetteur parmi un ensemble d'émetteurs non dédiés au système.**

(57) Le système comporte au moins deux récepteurs (A, B) munis respectivement d'un dispositif de communication pour transmettre vers une station centrale de synthèse (S) les informations qu'ils reçoivent d'au moins deux émetteurs (Y, Z). La station centrale (S) comporte des moyens de corrélation (6) des informations qu'elle reçoit des récepteurs (A, B) pour déterminer à partir des temps de propagation des ondes radioélectriques entre les émetteurs-récepteurs et la station centrale (S) au moins un lieu géométrique de la position recherchée du récepteur (A) ou de l'émetteur (Z) sur le géoïde terrestre.

Les applications vont aux systèmes d'aide à la navigation.

FIG.3

EP 0 672 917 A1

La présente invention concerne un système de localisation d'un récepteur ou d'un émetteur d'ondes radioélectriques parmi un ensemble d'émetteurs non dédiés au système.

Elle s'applique à la réalisation de systèmes de radionavigation comportant de faibles moyens d'infrastructure et à la localisation d'émetteurs dans la gamme des fréquences radioélectriques basses VLF-LF et MF.

Les systèmes de radionavigation connus types LORAN ou OMEGA comportent généralement au moins un récepteur dont la position géographique est recherchée et une ou plusieurs balises radioélectriques fixes disposées à des endroits bien déterminés sur la géoïde terrestre émettant sur des fréquences et avec des types de modulation dédiés au système. Les coûts de réalisation des infrastructures correspondantes sont très élevés et ceci d'autant plus que les systèmes couvrent un domaine géographique important. C'est le cas notamment des balises qui émettent de fortes puissances dans les bandes de fréquence VLF ou LF pour les besoins de radionavigation de submersibles par exemple.

Les systèmes de radiolocalisation d'émetteurs sont composés d'un ensemble de capteurs, chaque capteur effectuant le relèvement goniométrique de l'émission en utilisant soit une antenne directive, ou un système antennaire directif dans le cas de la goniométrie spatiale, soit un traitement de signal effectué en temps réel entre les phases des signaux reçus des différentes antennes dont il dispose. Dans ce dernier cas, la base antennaire du capteur doit avoir une dimension suffisante vis à vis de la longueur d'onde de l'émetteur à localiser. En VLF cela conduit à des distances entre antennes d'un même capteur très importantes, et rend ce type d'infrastructure difficile à réaliser dans les gammes des fréquences basses, du fait qu'il nécessite la présence d'un moyen de communication en temps réel entre les différentes antennes espacées d'un même capteur.

D'autre part, ces systèmes qui sont pour la plupart sous la responsabilité d'organismes gouvernementaux font courir un risque aux utilisateurs qui peuvent toujours se voir privés des services correspondants en cas de conflit par exemple.

Le but de l'invention est de pallier les inconvénients précités.

A cet effet, l'invention a pour objet un système de localisation d'un récepteur ou d'un émetteur d'ondes radioélectriques parmi un ensemble d'émetteurs non dédiés au système situés en des lieux déterminés sur le géoïde terrestre, caractérisé en ce que au moins deux récepteurs sont munis respectivement d'un dispositif de communication pour transmettre vers une station centrale de synthèse les informations qu'ils reçoivent d'au moins deux émetteurs et en ce que la station centrale comporte des moyens de corrélation des informations qu'elle reçoit des récepteurs pour déterminer à partir des temps de propagation des ondes radioélectriques entre les émetteurs-récepteurs et la station centrale au moins un lieu géométrique de la position recherchée du récepteur ou de l'émetteur sur le géoïde terrestre

L'invention a pour principal avantage qu'elle permet de réaliser des systèmes de radionavigation et de localisation d'émetteurs d'infrastructure simple ne nécessitant pas de balises d'émissions radioélectriques spécifiques pour référencer l'échelle des temps du système de radionavigation et ne nécessitant pas dans les bandes VLF-LF, de moyens de transmission en temps réel entre les différentes antennes espacées d'un même capteur.

D'autres caractéristiques et avantages de l'invention apparaîtront à l'aide de la description qui suit faite en regard des dessins annexés qui représentent :

- La figure 1 un exemple de configuration d'un système de localisation de récepteur selon l'invention ;
- La figure 2 un exemple de tracé de pistes pour la localisation d'un récepteur selon l'invention ;
- La figure 3 un exemple de localisation d'un récepteur par intersection de trois pistes selon l'invention ;
- La figure 4 un mode de réalisation d'un capteur composant le système de la figure 1 ;
- La figure 5 un mode réalisation d'une station centrale de synthèse composant le système de la figure 1 ;
- La figure 6 un graphe des temps de propagation du top de synchronisation transmis par une station centrale de synthèse vers les récepteurs du système représenté à la figure 1 ;
- La figure 7 un graphe de propagation des signaux émis par les émetteurs à destination des récepteurs du système de la figure 1 ;
- La figure 8 un aspect temporel des échantillons reçus par chacun des capteurs du système de la figure 1 ;
- Les figures 9 et 10 des exemples de corrélations effectuées par la station centrale S de la figure 5 sur les signaux émis par les émetteurs du système ;
- Les figures 11 et 12 des exemples de tracés de pistes pour localiser un émetteur.

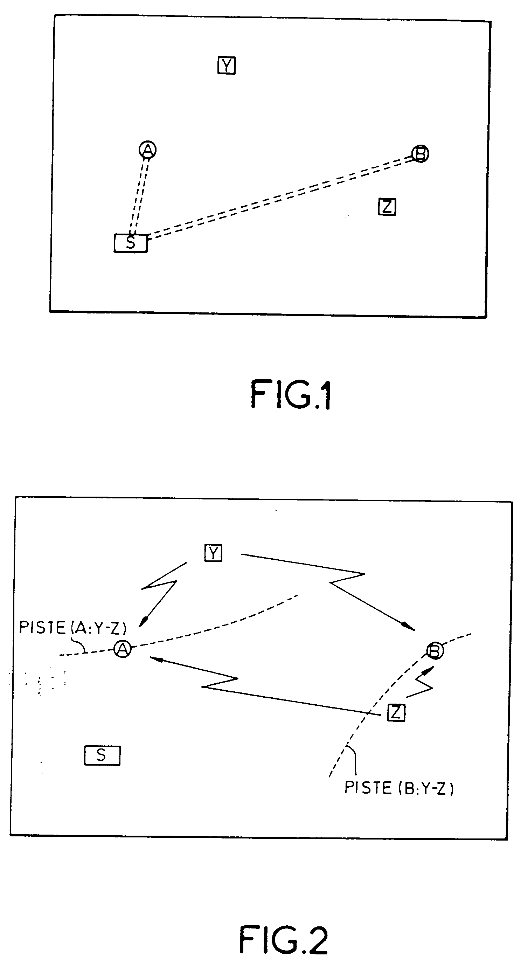

Selon l'invention, la localisation d'un récepteur mobile par radionavigation s'obtient par l'intersection de lieux géométriques de ce récepteur à la surface du globe terrestre. Chaque lieu géométrique est déterminé par l'ensemble des positions géographiques possibles pour lesquelles un récepteur qui serait placé en chacune de ces positions donnerait les mêmes résultats de mesure sur les signaux qu'il reçoit de sources d'émissions radioélectriques situées en des positions connues par lui sur le géoïde terrestre. Dans ce qui suit chaque lieu géométrique est assimilable à une piste sur laquelle se trouve le récepteur. Pour tracer une piste le système selon l'invention comprend, de la façon représentée à la figure 1, au moins deux récepteurs A et B, dénommés ci-après "capteurs" dont l'un A est solidaire d'un mobile et dont au moins un autre B est dans une position fixe connue sur le géoïde. Le système comprend également deux émetteurs de radiodiffusion ou de transmission de donnée, désignés par Y et Z sur la figure 1, une station centrale de synthèse S, et un dispositif pour la transmission de données entre les capteurs et la station centrale de synthèse S.

Les émetteurs Y et Z émettent sur des fréquences et en des positions connues par l'ensemble des éléments du système. Leur émission peut cependant être dédiée à une toute autre organisation que celle du système de radionavigation ou de radiolocalisation de l'invention. Il en est ainsi notamment lorsque des émetteurs de radiodiffusion sont utilisés. Cependant leurs émissions doivent pouvoir être reçues par les capteurs A et B. La station centrale de synthèse S reçoit les données transmises par le dispositif de transmission de données et effectue des calculs sur les données qu'il reçoit afin de communiquer les résultats à un opérateur ou à un autre système capable de les exploiter.

Comme montré sur la figure 2, une piste, où doit se situer le capteur A, dénommée [A:Y-Z1], est déterminée au niveau de la station centrale de synthèse S, par un calcul qui est effectué sur les données fournies par A et par B, en fonction de leur écoute des émissions qu'ils reçoivent des émetteurs Y et Z. Un calcul équivalent est effectué pour la piste [B:Y-Z] passant par B, la calibration du système s'effectuant par ajustement des paramètres permettant à la piste [B:Y-Z] de passer effectivement par le capteur B.

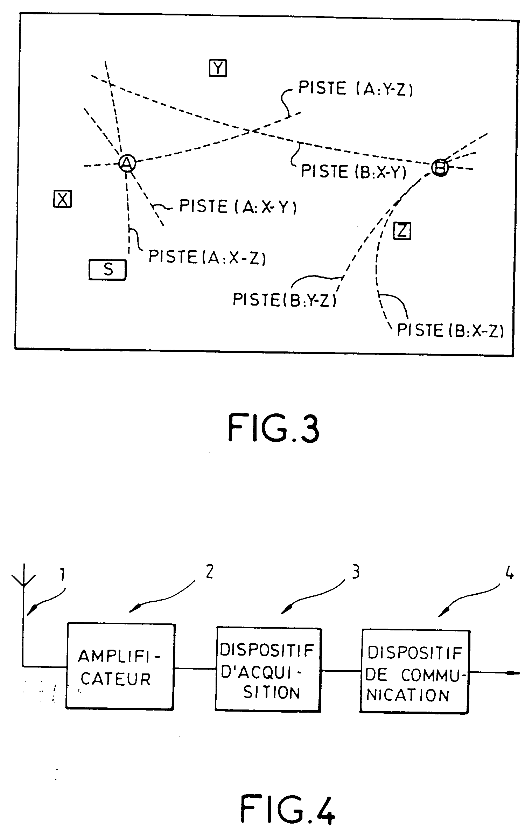

Afin de localiser le capteur A, le système met à profit, figure 3, le signal d'un troisième émetteur X, dont les émissions doivent également être reçues sur le capteur A et au moins le capteur B.

Grâce aux données d'écoute des émissions de X retransmises par les capteurs A et B, la station S trace les pistes [A:X-Y] et [A:X-Z], dont l'intersection avec la précédente piste [A:Y-Z] permet la localisation du capteur A.

Les pistes [B:X-Z] et [B:X-Y] sont également utilisées pour calibrer le système.

Chaque capteur est formé, comme le montre la figure 4 d'une antenne 1 couplée éventuellement à un dispositif composé d'un filtre et d'un amplificateur 2, d'un dispositif d'acquisition 3 effectuant l'échantillonnage et la numérisation du signal reçu sur l'antenne 1 et d'un dispositif de communication 4 entre la station centrale de synthèse S et le capteur.

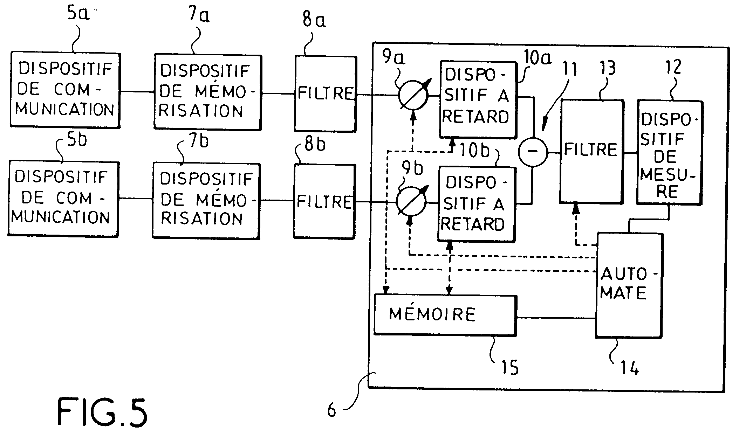

La station centrale de synthèse S comporte, de la manière représentée à la figure 5, des dispositifs de communication $5_a$, $5_b$ avec les capteurs A et B couplés à un corrélateur 6 par l'intermédiaire respectivement de dispositifs de mémorisation $7_a$, $7_b$ en série éventuellement avec des filtres $8_a$ et $8_b$.

Le corrélateur 6 comporte des moyens de calcul formés par des dispositifs de pondération $9_a$ et $9_b$ couplés respectivement entre les sorties des dispositifs de mémorisation 7a et $7_b$ et des dispositifs à retard $10_a$ et $10_b$. Un soustracteur 11 est placé en sortie des dispositifs à retard $10_a$ et $10_b$. Ce soustracteur 11 est relié par sa sortie à l'entrée d'un dispositif de mesure 12 par l'intermédiaire d'un filtre 13. Un automate 14 formé par un microprocesseur ou tout dispositif équivalent assure la commande des dispositifs $9_a$, $9_b$, $10_a$, $10_b$, 11, 12 et 13 du corrélateur 6. Une mémoire 15 est couplée à une sortie de donnée de l'automate 14 pour mémoriser les résultats de calcul effectué par l'automate 14 et éventuellement les convertir et les corriger.

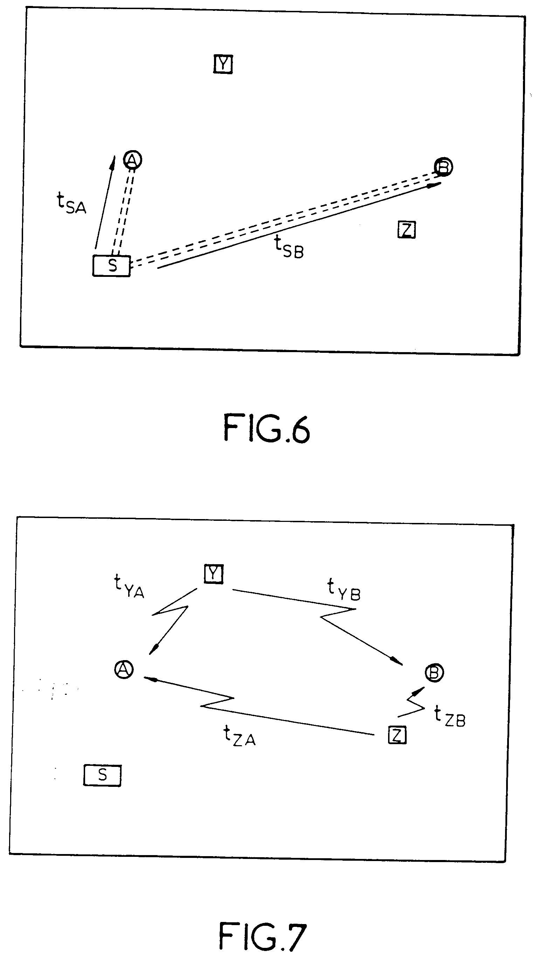

Suivant cette organisation les signaux appliqués aux entrées du corrélateur 6 sont pondérés en amplitude par les dispositifs de pondération $9_a$ et $9_b$ et les signaux résultants sont appliqués respectivement sur les deux entrées d'opérande du soustracteur 11 après avoir été retardés relativement l'un par rapport à l'autre par les dispositifs à retard $10_a$ et $10_b$. La différence des deux signaux ainsi obtenue est appliquée au dispositif de mesure 12 après avoir été filtrée par le filtre 13. La mesure du niveau du signal ainsi obtenu est exploitée par l'automate 14 pour la commande de l'ensemble des dispositifs formant le corrélateur 6, et pour calculer les coordonnées géographiques des pistes représentatives des lieux géométriques sur lesquels sont situés les capteurs A ou B. Pour ce faire, et en se référant à la figure 6 la station centrale S transmet à un instant initial $T_0$ un "top" aux deux capteurs A et B.

Ce "top" est reçu
- par le capteur A à l'instant $T_{SA} = T_0 + t_{SA}$
- par le capteur B à l'instant $T_{SB} = T_0 + t_{SB}$

$t_{SA}$ et $t_{SB}$ étant les temps de propagation du "top" entre la station S et les capteurs A et B.

A l'instant de réception de ce "top," le capteur A échantillonne le signal reçu sur son antenne, pendant une durée $t_{PROF}$.

Comme le montre la figure 7, le signal reçu par le capteur A est composé du signal émis par Z, retardé du délai de transmission $t_{ZA}$ entre Z et A du signal émis par Y, retardé du délai de transmission $t_{YA}$ entre Y et A et de bruits et signaux parasites.

De même, à l'instant de réception du "top", le capteur B effectue l'acquisition des échantillons du signal qu'il reçoit sur son antenne, pendant une même durée $t_{PROF}$.

Ce signal est composé du signal émis par Z, retardé du délai de transmission $t_{ZB}$ entre Z et Bn du signal émis par Y, retardé du délai $t_{YB}$ de transmission entre Y et B et de bruits et signaux parasites.

Chacun des deux capteurs A et B envoie ensuite à la station centrale de synthèse S les échantillons correspondant à leurs acquisitions.

En désignant par $T_Y$ l'instant où un phénomène remarquable temporellement, c'est-à-dire reconnaissable par corrélation, est émis par Y, et par $T_Z$ l'instant où un autre phénomène remarquable est émis par Z, ces phénomènes pouvant être, par exemple, un état de modulation particulier, un état de phase, d'amplitude, de fréquence, ...

- Le phénomène émis par Y       est reçu par A à $T_{YA} = T_Y + t_{YA}$ (1)
       et       est reçu par B à $T_{YB} = T_Y + t_{YB}$ (2)
       Le phénomène émis par Z       est reçu par A à $T_{ZA} = T_Z + t_{ZA}$ (3)
       et       est reçu par B à $T_{ZB} = T_Z + t_{ZB}$ (4)

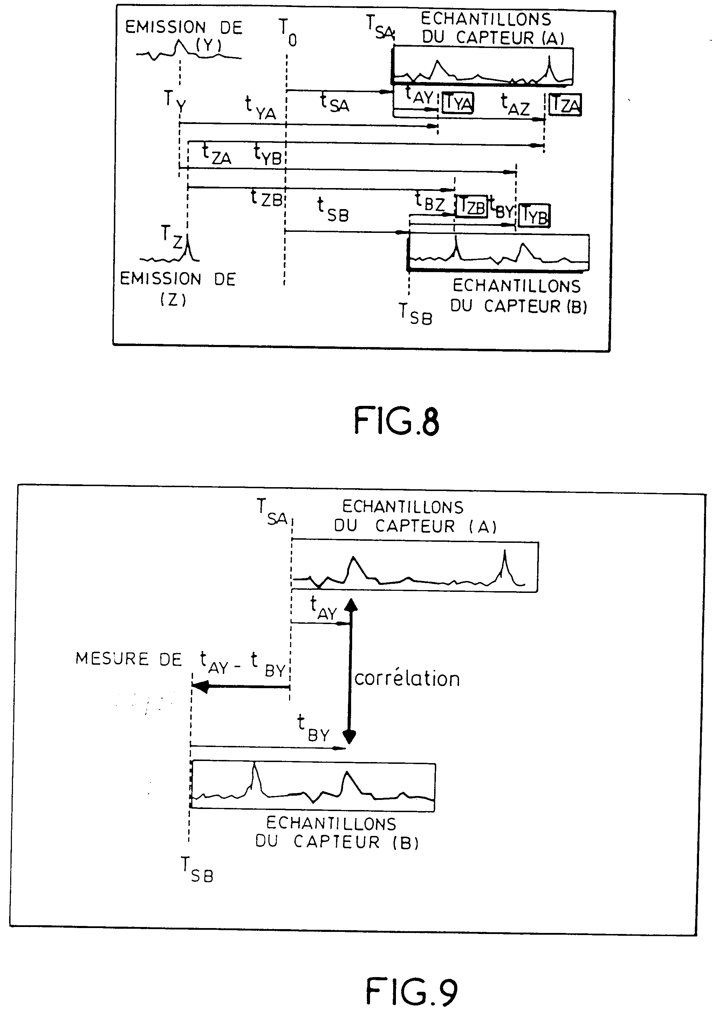

Les signaux correspondant à ces phénomènes sont mémorisés dans les dispositifs de mémorisation d'échantillons, $7_a$, $7_b$. Ils correspondent aux instants d'échantillonnage, représentés figure 8, et déterminés par les relations

$$T_{YA} = T_{SA} + t_{AY} \text{ (5)} \qquad T_{YB} = T_{SB} + t_{BY} \text{ (6)}$$
$$T_{ZA} = T_{SA} + t_{AZ} \text{ (7)} \qquad T_{ZB} = T_{SB} + t_{BZ} \text{ (8)}$$

Il découle des relations (5) à (8) les relations

$$T_Y + t_{YA} = T_{SA} + t_{AY} \quad \text{(9)}$$
$$T_Y + t_{YB} = T_{SB} + t_{BY} \quad \text{(10)}$$
$$T_Z + t_{ZA} = T_{SA} + t_{AZ} \quad \text{(11)}$$
$$T_Z + t_{ZB} = T_{SB} + t_{BZ} \quad \text{(12)}$$

d'où il vient la relation :

$$t_{YA} - t_{ZA} = (t_{AY} - t_{BY}) - (t_{AZ} - t_{BZ}) + (t_{YB} - t_{ZB}) \quad \text{(13)}$$

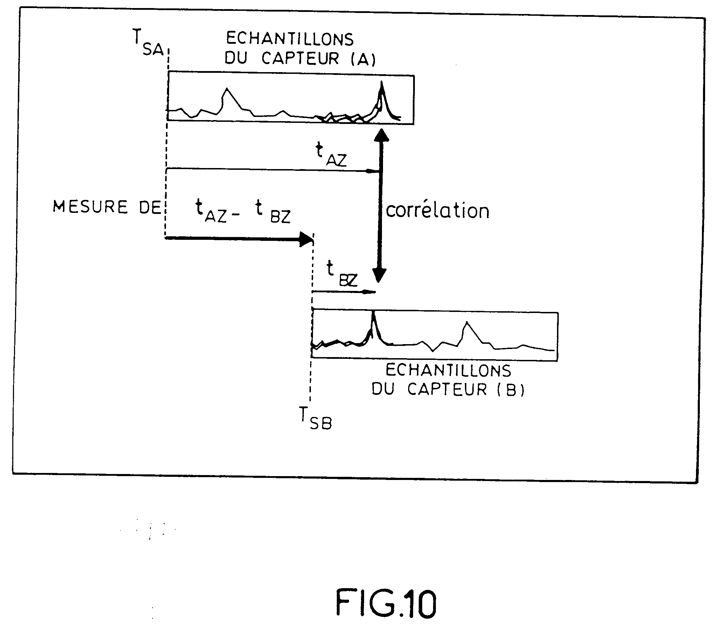

Les écarts de temps $(t_{AY} - t_{BY})$ et $(t_{AZ} - t_{BZ})$ sont mesurés par la station centrale de synthèse S en effectuant comme le montre les figures 9 et 10 deux corrélations successives sur les signaux émis par Y puis sur ceux émis par Z.

La première consiste à mesurer le retard nécessaire entre deux séries d'échantillons issues de A et B, pour que leur différence soit minimale à la fréquence de Y. La deuxième consiste à mesurer le retard nécessaire pour que l'écart soit minimal pour les échantillons correspondant à la fréquence de Z.

Ces corrélations peuvent être effectuées par balayage de toutes les valeurs de retard relatif (de $-t_{PROF}$ à $+ t_{PROF}$) entre les échantillons issus de A et ceux issus de B.

La différence $t_{YA} - t_{ZA}$ de la relation (13) désigne l'écart entre le temps de propagation de Y vers A et celui de Z vers A. Sa connaissance permet de tracer la piste [A:Y-Z], pour une valeur prédéterminée de la direction et de la vitesse de propagation de l'onde. La distance d séparant un émetteur d'un capteur est déterminée par la relation d = ct, c étant la célérité de l'onde et t le temps de propagation. Dans le cas où l'onde doit être considérée comme ayant une propagation par bonds multiples occasionnés par exemple, par des réflexions sur les couches de la ionosphère, la distance d est corrigée par une table de correction contenue dans le dispositif de mémorisation 15 de la figure 5. Cette table est adressée par divers paramètres qui tiennent compte d'une part, de la fréquence du signal, des conditions de propagation liées au mouvement diurne de la terre, aux saisons (été/hiver), aux déformations locales du front d'onde etc. et d'autre part, des valeurs de retard et de déphasage introduits par les filtres du système.

Le tracé de la piste [A:Y-Z] correspond au tracé des points dont la différence des distances respectives entre le capteur A et les deux émetteurs Y, Z est constante et égale à $C(t_{YA}-t_{YB})$.

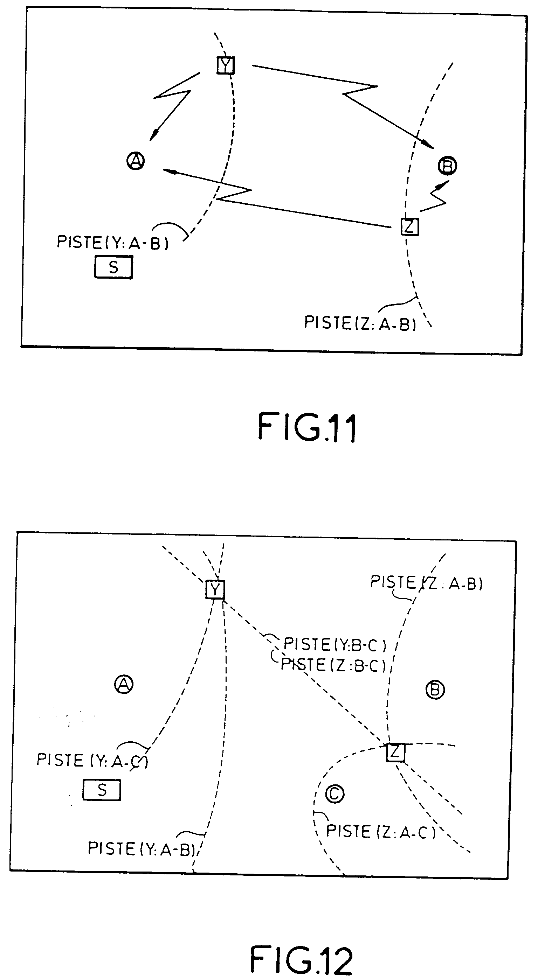

Ce tracé est défini comme le montre la figure 11 par une branche d'hyperbole ayant les positions des émetteurs Y et Z comme foyer.

Le principe décrit précédemment permet de tracer une piste passant par A.

En mettant à profit le signal rayonné par un troisième émetteur X, ce même principe, appliqué d'une part, au couple X et Y et d'autre part, au couple X, Z permet de tracer deux autres pistes [A:X-Y] et [A:X-Z].

L'intersection de ces trois pistes permet de localiser le capteur A.

En radiolocalisation l'organisation matérielle du système selon l'invention est la même qu'en radionavigation à la différence cependant que le problème n'est plus de localiser le capteur mais de localiser une source d'émission formée par exemple par l'émetteur Z. De façon similaire à ce qui a été décrit pour l'utilisation du système en radionavigation, la localisation d'un émetteur s'obtient par tracé de pistes, la position relevée de l'émetteur Z étant celle de l'intersection de ces pistes. Contrairement au système précédent les capteurs A et B doivent occuper des positions connues sur le géoïde au moment où s'effectue la localisation de l'émetteur Z.

La piste, passant par l'émetteur Z, dénommée [Z:A-B] est alors obtenue comme le montre la figure 11, par un calcul effectué sur les données fournies par les capteurs A et B qu'ils transmettent à la station centrale de synthèse S en fonction des émissions qu'ils reçoivent des émetteurs Y et Z. La calibration du système s'effectue par ajustement des paramètres permettant à la piste [Y:A-B] de passer sur la position connue de l'émetteur Y.

De façon différente au système de radionavigation précédemment décrit, le système met en oeuvre un troisième capteur C dont la position est également connue sur le géoïde terrestre. Le capteur C retransmet à la station centrale de synthèse S des données en réponse des émissions qu'il reçoit des émetteurs Y et Z. Grâce à ces données la station centrale de synthèse S trace les pistes [Z:A-C] et [Z:B-C], dont l'intersection avec la piste [Z:A-B] permet la localisation de l'émetteur Z.

Les pistes [Y:A-C] et [Y:B-C] sont également utilisées pour calibrer le système.

Le tracé de la piste [Z:A-B] s'obtient en calculant à partir des relations (1) à (12) précédentes la valeur de l'écart $t_{ZA}$-$t_{ZB}$ entre les temps de propagation des émissions de Z vers les capteurs A et B. Cet écart est alors vérifié par la relation :

$$t_{ZA} - t_{ZB} = (t_{YA} - t_{YB}) - (t_{AY} - t_{BY}) + (t_{AZ} - t_{BZ}) \quad (14)$$

Les écarts $(t_{AY}$-$t_{BY})$ et $(t_{AZ}$-$t_{BZ})$ sont mesurés par la station centrale de synthèse S par les deux corrélations déjà décrites à l'aide des figures 9 et 10.

L'écart $t_{YA}$-$t_{YB}$ mesure l'écart de propagation de l'émission de Y à destination des capteurs A et B. Comme les positions de A, B et Y sont connues le tracé de la piste [Y:A-B] permet de déterminer cette valeur.

La connaissance de l'écart $t_{ZA}$-$t_{ZB}$ qui est ainsi déterminé par la relation (14) permet le tracé de la piste [Z:A-B].

Cette piste correspond au tracé des points dont la différence des distances respectives entre l'émetteur Z et les capteurs A et B est constante et égale à $C(t_{ZA}$-$t_{ZB})$.

Ce tracé est défini par une branche d'hyperbole ayant les positions des capteurs A et B comme foyers.

Le principe décrit précédemment permet de tracer une piste passant par Z.

En mettant à profit le signal reçu par le troisième capteur C, ce même principe, appliqué d'une part, au couple des capteurs A et C et d'autre part, au couple B et C permet de tracer deux autres pistes [Z:A-C] et [Z:B-C] comme indiqué sur la figure 12.

**Revendications**

1. Système de localisation d'un récepteur ou d'un émetteur d'ondes radioélectriques parmi un ensemble d'émetteurs non dédiés au système situés en des lieux déterminés sur le géoïde terrestre, caractérisé en ce que au moins deux récepteurs (A, B) sont munis respectivement d'un dispositif de communication (4) pour transmettre vers une station centrale de synthèse (S) les informations qu'ils reçoivent d'au moins deux émetteurs (Y, Z) et en ce que la station centrale (S) comporte des moyens de corrélation (6) des informations qu'elle reçoit des récepteurs (A, B) pour déterminer à partir des temps de propagation des ondes radioélectriques entre les émetteurs-récepteurs et la station centrale (S) au moins un lieu géométrique de la position recherchée du récepteur (A) ou de l'émetteur (Z) sur le géoïde terrestre.

2. Système selon la revendication 1 caractérisé en ce que les moyens de corrélation (6) comprennent des moyens de calcul (11, 14, 15) de la différence des temps de propagation ($t_{YA}$ et $t_{ZA}$) des émissions d'au moins deux émetteurs (Y, Z) reçus sur le récepteur (A) à localiser.

3. Système selon la revendication 2 caractérisé en ce que la différence des temps de propagation ($t_{YA}$ et $t_{ZA}$) est obtenue en effectuant :
   - une premier différence entre les temps de propagation ($t_{YA}$ et $t_{ZA}$) des émissions d'un premier émetteur (Y) reçues par le récepteur (A) à localiser et par un deuxième récepteur (B),
   - une deuxième différence entre les temps de propagation ($t_{YA}$ et $t_{ZA}$) des émissions d'un deuxième émetteur (Z) reçues par le récepteur (A) à localiser et le deuxième récepteur (B)
   - une troisième différence entre les temps de propagation des émissions ($t_{YB}$ et $t_{ZB}$) des premier et deuxième émetteurs reçues par le deuxième récepteur (B),
   - ainsi que la somme de la troisième différence, à la différence des écarts de temps entre les résultats obtenus par la première et la deuxième différence.

4. Système selon l'une quelconque des revendications 1, 2 et 3 caractérisé en ce que le lieu géométrique de la position recherchée du récepteur (A) est déterminée sur une branche d'hyperbole ayant comme foyers les positions de deux émetteurs (Y, Z) et telle que l'écart des temps de propagation des émissions des deux émetteurs reçues par le récepteur (A) à localiser soit constant.

5. Système selon la revendication 4 caractérisé en ce qu'il comprend au moins un troisième émetteur (X) pour obtenir à partir des couples qu'il forme avec le premier (Y) et le deuxième émetteur (Z) deux autres branches d'hyperbole ayant les couples d'émetteurs pour foyers et déterminer la position du récepteur (A) recherché à l'intersection des trois branches d'hyperboles ainsi obtenues.

6. Système selon la revendication 1 caractérisé en ce que les moyens de corrélation comprennent des moyens de calcul de la différence des temps de propagation ($t_{ZA}$-$t_{ZB}$) des émissions de l'émetteur (Z) à localiser reçues par les deux récepteurs (A, B).

7. Système selon la revendication 6 caractérisé en ce que la différence des temps de propagation ($t_{ZA}$-$t_{ZB}$) est obtenue en effectuant :
   - une première différence entre les temps de propagation ($t_{AY}$ et $t_{BY}$) des émissions d'un deuxième émetteur (Y) reçues par les récepteurs (A, B)
   - une deuxième différence entre les temps de propagation ($t_{AZ}$ et $t_{BZ}$) des émissions de l'émetteur (Z) à localiser reçues par les récepteurs (A, B)

- une troisième différence entre les temps de propagation ($t_{YA}$ et $t_{YB}$) des émissions du deuxième émetteur (Y) reçues par les récepteurs (A, B)
- ainsi que la somme de la deuxième différence, à la différence des écarts de temps entre les résultats obtenus par la première et la troisième différence.

8. Système selon l'une quelconque des revendications 1, 6 et 7 caractérisé en ce que la position recherchée de l'émetteur (Z) est déterminée sur une branche d'hyperbole ayant comme foyer les positions des deux récepteurs (A, B) et telle que l'écart des temps de propagation des émissions de l'émetteur (Z) à localiser reçues par les deux récepteurs (A, B) est constant.

9. Système selon la revendication 8 caractérisé en ce qu'il comprend au moins un troisième récepteur pour obtenir à partir des couples qu'il forme avec l'émetteur à localiser et le deuxième émetteur deux autres branches d'hyperbole ayant ces couples pour foyers et déterminer la position de l'émetteur (Z) à localiser à l'intersection des trois branches d'hyperboles ainsi obtenues.

# FIG.1

PISTE (A:Y-Z)

PISTE (B:Y-Z)

# FIG.2

# FIG.3

# FIG.4

5a
7a
8a

DISPOSITIF DE COM- MUNICATION

DISPOSITIF DE MÉMO- RISATION

FILTRE

9a

DISPO- SITIF A RETARD

10a  11  13  12

DISPO- SITIF DE MESU- RE

5b
7b
8b

DISPOSITIF DE COM- MUNICATION

DISPOSITIF DE MÉMO- RISATION

FILTRE

9b

10b

DISPO- SITIF A RETARD

FILTRE

AUTO- MATE

MÉMOIRE

15  14

6

FIG.5

## FIG.6

## FIG.7

FIG.8

FIG.9

FIG.10

**FIG.11**

**FIG.12**

EP 0 672 917 A1

Office européen
des brevets

**RAPPORT DE RECHERCHE EUROPEENNE**

Numero de la demande

EP 95 40 0545

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB-A-2 226 730 (THE MARCONI COMPANY LIMITED) <br> * abrégé; figure 1 * <br> --- | 1 | G01S5/10 <br> G01S5/06 <br> G01S5/00 |
| A | EP-A-0 303 371 (DUFFETT-SMITH) <br> * abrégé; figure 1 * <br> --- | 1 | |
| A | US-A-4 651 156 (MARTINEZ) <br> * abrégé; figure 1 * <br> ------ | 1 | |

**DOMAINES TECHNIQUES RECHERCHES (Int.Cl.6)**

G01S

Le présent rapport a été établi pour toutes les revendications

| Lieu de la recherche | Date d'achèvement de la recherche | Examinateur |
|---|---|---|
| LA HAYE | 30 Mai 1995 | Haffner, R |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14